# EUROPEAN PATENT SPECIFICATION

(11) **EP 2 434 191 B1**
(45) Date of publication and mention of the grant of the patent: **04.07.2018**
(21) Application number: 10777790.6
(22) Date of filing: 19.05.2010
(51) Int. Cl.: F16L 19/08, F16L 25/02, F16L 19/10, F16L 19/065

(54) **PIPE JOINT**
ROHRVERBINDUNG
RACCORD DE TUYAU

(30) Priority: 22.05.2009 JP 2009123834
(43) Date of publication of application: 28.03.2012
(73) Proprietor: Higashio Mech Co., Ltd., Kawachinagano-shi Osaka 586-0012 (JP); Inoac Housing&Construction Materials Co., Ltd., Aichi 456-0068 (JP)
(72) Inventor: FUKUYAMA, Jun, Kawachinagano-shi Osaka 586-0012 (JP); WASHINO, Mitsuhiro, Nagoya-shi Aichi 156-0068 (JP)
(74) Representative: Hoffmann Eitle
(86) International application number: PCT/JP2010/058473
(87) International publication number: WO 2010/134557

(56) References cited:
- EP-A2- 1 643 178
- DE-A1- 4 041 677
- GB-A- 969 837
- JP-A- 2005 221 013
- JP-A- 2008 232 227
- JP-T- 2004 519 636
- JP-T- 2008 546 966
- JP-U- 62 204 086
- US-A- 2 452 276
- US-A- 2 930 635
- US-A- 4 136 896
- US-A1- 2004 183 303

## Description

### FIELD OF THE INVENTION

This invention relates to a pipe joint.

### BACKGROUND ART

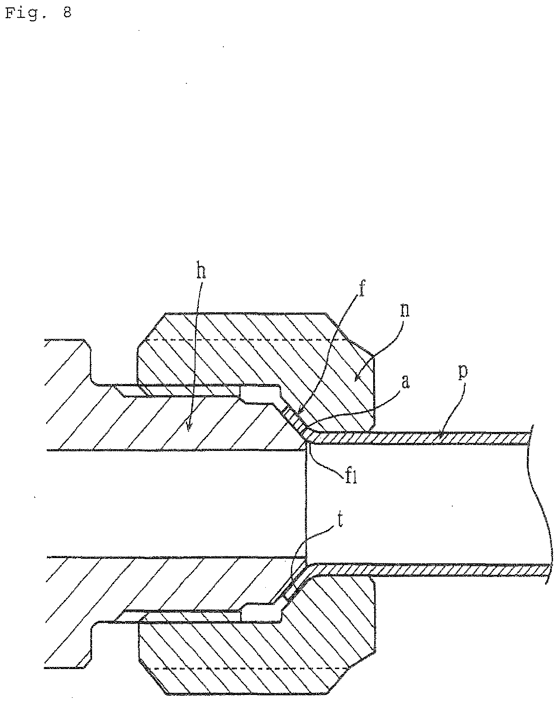

A flare joint is widely known as a kind of pipe joint. Generally, this flare joint is, as shown in Figure 8, constructed as that a flared portion f is formed on an end portion of a pipe P by plastic work with a specialized jig, the flared portion f is made contact with a tapered portion a of a flare joint main body h and fastened by a cap nut n to be held by a tapered face t of the cap nut n and the tapered portion a of the flare joint main body h to secure sealability by mutual press-fitting of metal faces (refer to Japanese Patent Provisional
Publication NO. 2005-42858, for example).

Another document is US 2,452,276 A which refers to a tube fitting device.

### OUTLINE OF THE INVENTION

### PROBLEMS TO BE SOLVED BY THE INVENTION

However, in case that A1 is used as the material for the connected pipe P, contact corrosion of dissimilar metals is generated when the joint main body h and the cap nut n are made of Cu system alloy such as brass. As shown in Figure 8, contact corrosion of dissimilar metals is easily generated among the pipe P, the joint main body h, and the cap nut n because water (water drops) intrude to the held portion of the flared portion f in the construction. And, it is necessary to form the flared portion f on the end portion of the connected pipe P with specialized tools on the working site, working efficiency is lowered and quality dispersion is generated thereby. Further, a crack tends to be generated on a small diameter end edge f₁ of the flared portion f of the pipe P. Especially, the crack generation ratio is high when the material of the pipe is Al. The thickness of the pipe P is reduced when the cap nut n is fastened, and consequently, seal ability reduction and loosening of the cap nut n tend to be generated.

Therefore, it is an object of the present invention to provide a pipe joint with which the generation of the contact corrosion of dissimilar metals when a pipe of Al is used, (despite the usage of a flare joint main body) flare working on the pipe can be omitted, connection quality is improved, and loosening is hardly generated. It is another object to provide a pipe joint especially good for piping of cooling media.

### MEANS FOR SOLVING THE PROBLEMS

Therefore, the pipe joint of the present invention comprises the features of claim 1.

According to a preferred embodiment, the insulation ring is provided with a sealing ridge tightly contacts the peripheral face of the connected pipe.

And, a seal may be disposed between the female screw portion formed on the hole portion of the cap nut and the isodiametric portion, and an inner diameter dimension of the seal is set to be smaller than an outer diameter dimension of the stop ring in the disposed state as to prevent the stop ring from dropping off the cap nut in an unused state.

### EFFECTS OF THE INVENTION

According to the present invention, a straight pipe without flare work on the end portion is easily and swiftly connected to the flare joint main body having a forward-diminishing tapered portion to conduct piping work efficiently. Working dispersion is hardly generated and quality is stabilized. Al (comparatively economical) can be used as the material of the connected pipe. That is to say, contact corrosion of dissimilar metals can be artfully prevented.

And, loosening of the cap nut is hardly generated. Especially, the pipe joint is good for piping of cooling media as in air conditioners.

### BRIEF DESCRIPTION OF THE DRAWINGS

[Figure 1] A cross-sectional view showing a state of an embodiment of the present invention in which the pipe connection is mostly completed.
[Figure 2] A cross-sectional view showing a connected state of the pipe.
[Figure 3] A cross-sectional view showing an example of the cap nut.
[Figure 4] An enlarged cross-sectional view showing a principal portion of the cap nut.
[Figure 5] An enlarged cross-sectional view showing an example of the stop ring.
[Figure 6] A cross-sectional view showing an insulation ring.
[Figure 7] A cross-sectional view of a principal unit serving also as a working explanatory view.
[Figure 8] A cross-sectional view showing a conventional example.

### EMBODIMENTS OF THE INVENTION

The present invention will now be described according to the embodiments shown in the drawings.

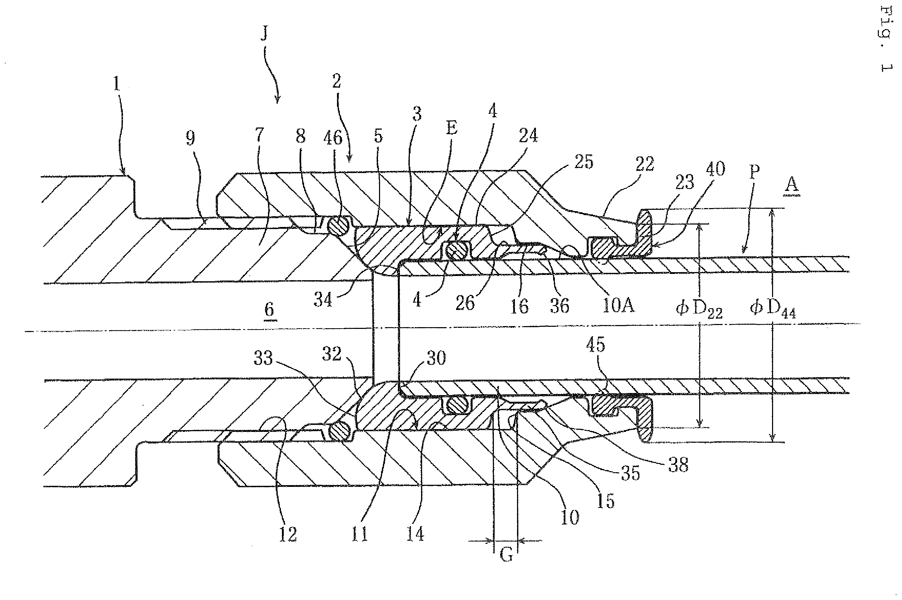

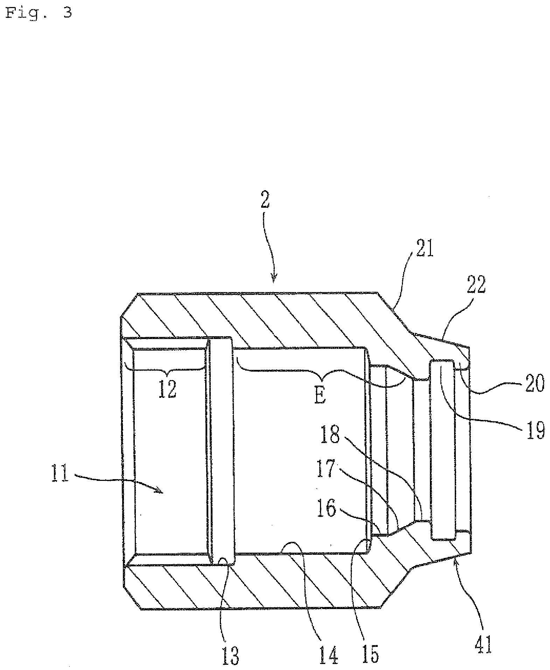

In the embodiment shown in Figure 1 through Figure 7, a pipe joint J relating to the present invention is provided with a flare joint main body 1, a cap nut 2, a stop ring 3, and a cooling medium resistant seal 4. Further, the joint has a straight end portion 10 (without conventional flare work) on the end of the pipe P to be connected.

The flare joint main body 1 has a configuration and construction similar to that of conventional joint main body (refer to the flare joint main body h in Figure 8), and has a forward-diminishing tapered portion 5. That is to say, the forward-diminishing tapered portion 5 is formed on an end of a connecting cylinder portion 7 in which a duct hole 6 is formed.

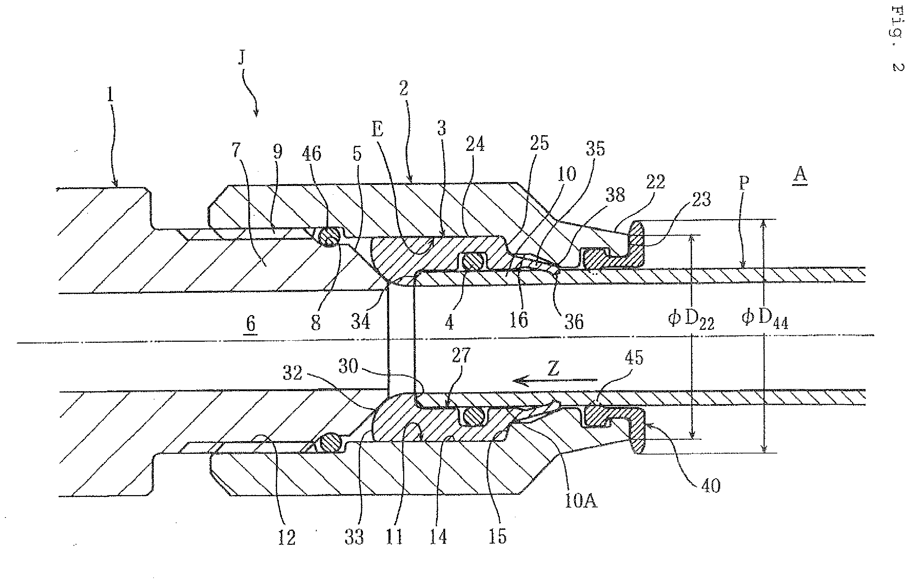

While the entire configuration of the joint is freely formed as straight, T-shaped, Y-shaped, cross-shaped, the configuration of another connecting end out of the figures 1 and 2 may have a connecting cylinder portion similar to the connecting cylinder portion 7 in Figures 1 and 2, a tapered male screw, a parallel male screw, or a welding cylinder portion.

In other words, at least one connecting cylinder portion 7 as shown in Figures 1 and 2 is provided, and the connecting cylinder portion 7 has a male screw portion 9 of parallel screw through a short straight portion 8 continuing from the base end edge of the tapered portion 5. Yellow copper (Brass) is appropriate for the material of the flare joint main body 1 (because it is conventionally and widely used).

A hole portion 11 is formed through the cap nut 2 in the axis direction, the hole portion 11 has a female screw portion 12 screwed to the male screw portion 9 on the base end, and a sealing groove 13 having a width dimension W₁₃ small in the axis direction, an isodiametric (straight) portion 14, a staged portion 15, a short straight portion 16 having a small width dimension W₁₆, a forward-diminishing tapered portion 17, a short straight portion 18 (having an inner diameter dimension slightly larger than the outer diameter of the connected pipe P), a concave groove portion 19, and an inner brim portion 20 are serially formed toward the forth end.

A storing space E to store the stop ring 3 is formed with the middle isodiametric (straight) portion 14 of the hole portion 11, the staged portion 15, the short straight portion 16, and the tapered portion 17 (refer to Figures 1, 2, 3, and 4). The material of the cap nut 2 is preferably yellow copper (brass) such as C3604 for prevention of contact corrosion of dissimilar metals with the flare joint main body 1. And, the peripheral configuration of the cap nut 2 is formed hexagonal in cross section except the forth end side as to be easily given rotational torque with holding by working tool. Further, a forward-diminishing first tapered face 21 having large inclination angle of 40° to 50°, and forward-diminishing second tapered face 22 having small inclination angle of 10° to 25° are serially disposed on the peripheral face of the forth end side of the cap nut 2 to make a tip end outer diameter dimension D₂₂ as close as the outer diameter dimension of the pipe P within the allowable range of strength. That is to say, in comparison with the conventional example in Figure 8, the outer diameter dimension of the cap nut end face 23 is sufficiently small, and the width dimension of the ring shape of the end face 23 (when observed in the axis direction) is set to be small.

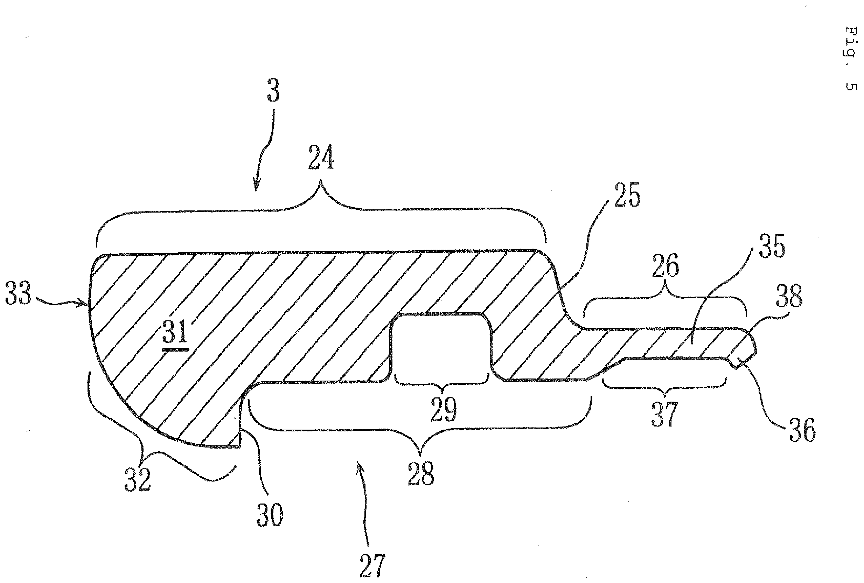

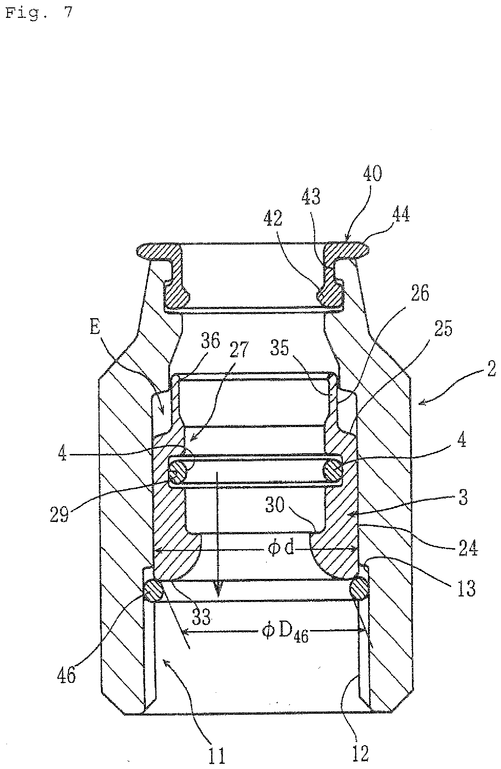

Next, to explain the stop ring 3, the stop ring 3, as shown in Figure 5 and Figures 1, 2, and 7, is stored in the above-mentioned storing space E of the cap nut 2 with a movable area of axis direction from Figure 7 to Figure 2. The cross-sectional configuration of the stop ring 3 is a short cylinder having a basic outer diameter portion 24 slidably fits (corresponds) to the isodiametric (straight) portion 14 of the hole portion 11 of the cap nut 2 and a small diameter portion 26 continuing from the forth end side through a staged portion 25 on the peripheral face from the base end to the middle position. And, an inner peripheral face 27 has a basic inner diameter portion 28 on a middle position in the axis direction, a sealing concave groove 29 is disposed on a middle position in the axis direction of the basic inner diameter portion 28, and the pipe P is inserted to the basic inner diameter portion 28 as shown in Figures 1 and 2. The anti-cooling media seal 4 (composed of IIR), excellent in durability against cooling media for air conditioning, is fit to the sealing concave groove 29.

Further, on the end portion (on the left side of Figure 5) of the basic inner diameter portion 28, an inner peripheral configuration, in which a staged portion 30 and an R-shaped press-fit sloped face 32 are serially formed, is composed. As shown in Figure 1 and Figure 2, the R-shaped press-fit sloped face 32 is press-fit (with mutual contact of metal faces) to the forward-diminishing tapered portion 5 of the flare joint main body 1 to seal. In the figures, the R-shaped press-fit sloped face 32 has a cross sectional configuration drawn from the inner peripheral face 27 to a base end face 33 in the axis direction with a large radius of diameter to form a protruding portion 31 approximately quarter-circular.

In other words, in the stop ring 3, an R-shaped chamfer is made on the corner portions of the inner peripheral face 27 and the base end face 33 with a large radius of diameter to form the press-fit sloped face 32. And, although not shown in Figures, the press-fit sloped face 32 may be inclined (inclined straight line)

An end face 34 of the inserted pipe P contacts the staged portion 30.

And, the forth end side of the stop ring 3 has a plastically-deformable thin cylindrical portion 35 and a claw portion 36 to bite into the peripheral face of the pipe unitedly.

That is to say, in the stop ring 3, a shallow escape portion 37 is concaved on the forth end side of an inner peripheral face 27, and the thin cylindrical portion 35 is formed as that the claw portion 36 on the forth end in a free state shown in Figure 5 and Figure 1 can elastically diminish to a biting state shown in Figure 2 by cooperation with the small diameter portion 26 on the peripheral side. Slits in the axis direction and small holes do not exist on the thin cylindrical portion 35 including the claw portion 36.

The claw portion 36, scalene triangle in cross section, is directed inward to the base end, and having a configuration easily bites into the peripheral face of the pipe P against the drawing force of the pipe P.

As shown in Figure 1, when the pipe P is inserted and the female screw portion 12 is slightly screwed to the male screw portion 9 by giving small rotational torque to the cap nut 2, the forth end of the small diameter portion 26 (the thin cylindrical portion 35) of the stop ring 3 lightly contacts the tapered portion 17 of the cap nut 2. In this case, a gap of a predetermined small dimension G exists in the axis direction between the staged portion 25 of the stop ring 3 and the staged portion 15 of the cap nut 2.

Then, as the cap nut is screwed, as shown in Figure 1 and Figure 2, a forth-end outer peripheral corner portion 38 of the thin cylindrical portion 35 is strongly squeezed by the tapered portion 17, namely, pressed toward the inner diameter direction, and the claw portion 36 bites into the peripheral face 10A of the straight end portion 10 of the pipe P. This biting generates pipe-drawing resistance Z (refer to Figure 2). Oxygen intrusion from the atmosphere side A to the anti-cooling medium seal 4 (inside) is prevented by the biting simultaneously.

In other words, when the claw portion 3 bites into the peripheral face 10A of the pipe end portion 10 (because the thin cylindrical portion 35 has no slits and through holes), air (oxygen) intrusion to the anti-cooling medium seal 4 disposed on a middle position in the axis direction of the inner peripheral face 27 of the stop ring 3 is cut, the anti-cooling medium seal 4 composed of IIR is made long-life. Considering improvement of sealability on the press-fit portion on the forward-diminishing tapered portion 5 of the flare joint main body 1 and plastic deformability, yellow copper (brass) such as C3604 is preferable as the material of the stop ring 3.

Further, oxygen intrusion to the press-fit portion is also stopped by strong press fit of the outer peripheral corner portion 38 near the claw portion 36 and the tapered portion 17.

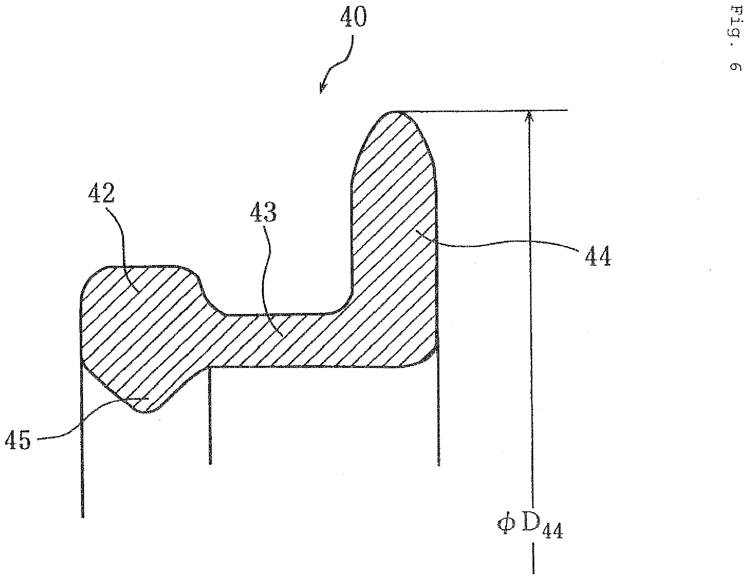

Next, in Figure 6, and Figures 1, 2, and 7, an insulation ring 40 is attached to the cap nut 2. The insulation ring 40 is composed of rubber or plastic having insulation, preferably rubber such as EPDM excellent in durability and weatherproof, and attached to a cap nut end portion 41. As shown in Figure 6, a protruding portion 42 of which cross section is approximately pentagonal, a thin cylindrical wall portion 43, and an outer brim portion 44 standing outward on an outer end of the cylindrical wall portion 43 are unitedly formed.

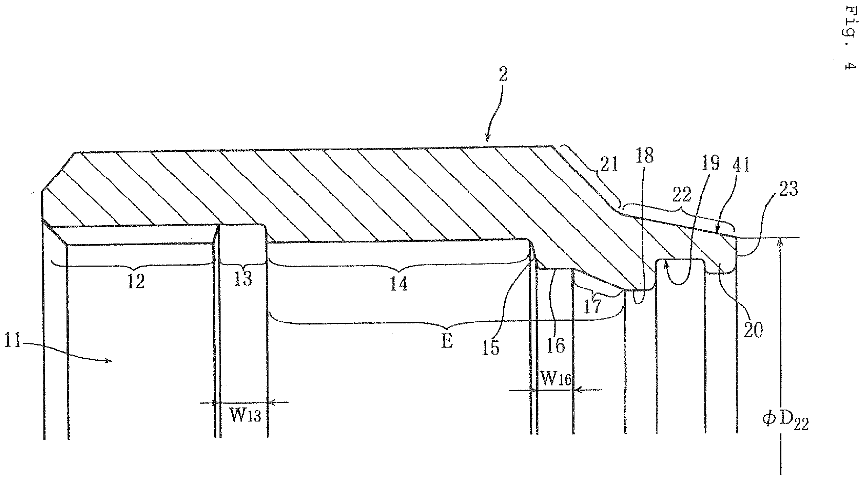

The protruding portion 42 is fit to the concave groove portion 19 (shown in Figure 4), and a triangular sealing ridge 45 is formed protruding inward. The sealing ridge 45 tightly contacts the peripheral face of the pipe P with elastic pressing force to prevent intrusion of electrolyte such as water into the pipe joint, and certainly prevent contact corrosion of dissimilar metals within the pipe joint.

And, the insulation ring 40 with the cylindrical wall portion 43 and the outer brim portion 44 surrounds (covers) the inner peripheral face and the peripheral face (the cap nut end face 23) of the inner brim portion 20 of the cap nut 2. As described above, the insulation ring 40 contacts the peripheral face of the connected pipe P, the direct contact of the cap nut 2 of yellow copper (brass) and the peripheral face of the pipe P of Al is prevented, and contact corrosion of dissimilar metals is prevented with insulation.

Further, it is preferable to set an outer diameter dimension D₄₄ of the outer brim portion 44 slightly larger than the (formerly mentioned) outer diameter dimension D₂₂ of the cap nut end face 23. That is to say, the outer brim portion 44 certainly prevents water drops from being accumulated and bridging on a corner portion formed by the cap nut end face 23 and the pipe peripheral face. When the insulation ring 40 does not exist, or the outer diameter dimension D₄₄ of the outer brim portion 44 is extremely small, electrolyte such as water drops may be accumulated (by bridging) and contact corrosion of dissimilar metals may be generated. The insulation ring 40 effectively prevents this kind of corrosion (electrolytic corrosion). The cross-sectional configuration of the protruding portion 42, freely changeable, may be circular (an arc-shaped sealing ridge 45 is formed also in this case), and two or more sealing ridges 45 may be formed.

A seal 46 such as an 0-ring is fit to the sealing groove 13 next to the female screw portion 12 of the cap nut 2. The material for the seal 46 is preferably rubber such as EPDM excellent in durability, and the seal 46 contacts the straight portion 8 of the flare joint main body 1 in the used (connected) state in Figure 2 for tight seal.

The seal 46 has two functions. One is preparatory sealing function supporting the sealing action by mutual press fitting of the metal faces of the press-fit sloped face 32 and the tapered portion 5 as shown in Figure 2, and the other is falling prevention function for the stop ring 3 as shown in Figure 7.

To explain the latter function and the construction to perform the function and action, (as shown in Figure 7 and Figure 1) the seal 46 is disposed between the female screw portion 12 formed on the hole portion 11 of the cap nut 2 and the isodiametric portion 14 (namely, the sealing groove 13), and an inner diameter dimension D₄₆ of the seal 46 in the attached state is set to be smaller than the outer diameter dimension d of the stop ring 3, a corner portion of the base end face 33 of the stop ring 3 is held as to hitch to the inner peripheral edge of the seal 46, and the stop ring 3 does not fall downward from the cap nut 2 even in the state shown in Figure 7. As described above, the seal 46 is prevented from sudden falling in unused state (in handling in factory, in store, in transfer, in piping work).

The pipe joint relating to the present invention is appropriate for sealing cooling medium (gas) for air conditioner, easy to assemble and excellent in workability, and conventional forming work of the flared portion f of the pipe P (refer to Figure 8) can be completely omitted. Therefore, unevenness by workers and working tools is eliminated and quality is made stable. Further, specialized tools are not necessary. Further, workability is improved further without in core.

And, when the cap nut 2 is screwed as in Figure 2 until the small dimension G in Figure 1 vanishes, the claw portion 36 automatically bites into the peripheral face of the pipe P to show drawing resistance Z, and the press-fit sloped face 32 of the stop ring 3 simultaneously makes mutual strong press fitting of metal faces with the tapered portion 5 of the flare joint main body 1 for tight seal. Further, the seal 46 as shown in Figure 1 slightly moves as shown in Figure 2 simultaneously to be pressed elastically by the straight portion 8 as to show a function as a sub seal (auxiliary seal) for the sealed portion by the mutual press fitting of metal faces of the press-fit sloped face 32 and the tapered portion 5.

The cooling-medium resistant seal 4 is preferably an O-ring of IIR (butyl rubber) having very low permeation of cooling medium (gas). Although the O-ring of IIR tends to be degenerated by oxidation, this can be prevented by the biting of the claw portion 36 to the peripheral face of the pipe. Cu is also preferable for the pipe P in the present invention, and the insulation ring 40 may be omitted in case, which is not forming a part of the present invention. this case. And, the present invention can be used for piping for water supply when desired.

### EXPLANATION OF THE MARKS

- 1: A flare joint main body
- 2: A cap nut
- 3: A stop ring
- 4: A cooling medium resistant seal
- 5: A forward-diminishing tapered portion
- 9: A male screw portion
- 10: A straight end portion
- 10A: A peripheral face
- 11: A hole portion
- 12: A female screw portion
- 14: An isodiametric portion
- 17: A tapered portion
- 29: A sealing concave groove
- 32: A press-fit sloped face
- 35: A thin cylindrical portion
- 36: A claw portion
- 40: An insulation ring
- 41: A cap nut end portion
- 45: A sealing ridge
- 46: A seal (0-ring)
- P: A pipe
- E: A storing space
- D₄₆: An inner diameter dimension
- d: An outer diameter dimension

## Claims

1. A pipe joint, comprising:
a flare joint main body (1), having a male screw portion (9) and a forward-diminishing tapered portion (5),
a cap nut (2), having a female screw portion (12) screwed to the male screw portion (9) on a base end of a hole portion (11) of the cap nut (2), and a storing space (E) having an isodiametric portion (14) and a forward-diminishing tapered portion (17) is formed on a middle of the hole portion (11),
a stop ring (3), fit into the storing space (E), having a press-fit sloped face (32) to be press-fit to the forward-diminishing tapered portion (5), having a plastically-deformable thin cylindrical portion (35) on an end side and a claw portion (36) to bite into a peripheral face of the pipe, and having a sealing concave groove (29) formed on a middle portion on the inner periphery of the stop ring (3), a seal (4), fit to the sealing concave groove (29) of the stop ring (3), wherein
the claw portion (36) of the stop ring (3) bites into a peripheral face (10A) of the straight end portion (10) of the connected pipe (P) along with screwing of the cap nut (2) to generate pipe drawing resistance (Z),
the cap nut (2) has a circular insulation ring (40) on a cap nut end portion (41) corresponding to the peripheral face of the connected pipe (P), and
the insulation ring (40) covers an inner brim portion (20) and an end face (23) of the cap nut (2).

2. The pipe joint as set forth in claim 1, wherein the insulation ring (40) is provided with a sealing ridge (45) tightly contacts the peripheral face of the connected pipe (P) .

3. The pipe joint as set forth in claim 1 or claim 2, wherein a seal (46) is disposed between the female screw portion (14) formed on the hole portion (11) of the cap nut (2) and the isodiametric portion (14), and an inner diameter dimension (D₄₆) of the seal (46) is set to be smaller than an outer diameter dimension (d) of the stop ring (3) in the disposed state as to prevent the stop ring (3) from dropping off the cap nut (2) in an unused state.

## Patentansprüche

1. Rohrverbindung, umfassend:
einen Aufweitungsverbindungshauptkörper (1), der einen Außengewindeabschnitt (9) und einen sich nach vorne verkleinernden verjüngten Abschnitt (5) aufweist,
eine Überwurfmutter (2), die einen Innengewindeabschnitt (12) aufweist, der auf den Außengewindeabschnitt (9) auf einem Basisende eines Lochabschnitts (11) der Überwurfmutter (2) geschraubt ist,
und einen auf einer Mitte des Lochabschnitts (11) gebildeten Lagerungsort (E), der einen isodiametrischen Abschnitt (14) und einen sich nach vorne verkleinernden verjüngten Abschnitt (17) aufweist,
einen Anschlagring (3), der in den Lagerungsort (E) passt, der eine pressgepasste geneigte Fläche (32) aufweist, um in den sich nach vorne verkleinernden verjüngten Abschnitt (5) pressgepasst zu werden, einen plastisch verformbaren dünnen zylindrischen Abschnitt (35) auf einer Endseite und einen Klauenabschnitt (36) aufweisend, um in eine periphere Fläche des Rohrs einzugreifen, und eine konkave Dichtungsnut (29) aufweisend, die auf einem mittleren Abschnitt der inneren Peripherie des Anschlagsrings (3) gebildet ist,
eine Dichtung (4), die auf die konkave Dichtungsnut (29) des Anschlagrings (3) passt, wobei
der Klauenabschnitt (36) des Anschlagrings (3) in eine periphere Fläche (10A) des geraden Endabschnitts (10) des verbundenen Rohrs (P) mit einer Einschraubung der Überwurfmutter (2) eingreift, um Rohrzugwiderstand (Z) zu erzeugen,
wobei die Überwurfmutter (2) einen kreisförmigen Isolierring (40) auf einem Überwurfmutterendabschnitt (41) aufweist, der der peripheren Fläche des verbundenen Rohrs (P) entspricht, und
wobei der Isolierring (40) einen inneren Krempenabschnitt (20) und eine Endfläche (23) der Überwurfmutter (2) bedeckt.

2. Rohrverbindung nach Anspruch 1, wobei der Isolierring (40) mit einer Dichtungskante (45) versehen ist, die die periphere Fläche des verbundenen Rohrs (P) dicht berührt.

3. Rohrverbindung nach Anspruch 1 oder Anspruch 2, wobei eine Dichtung (46) zwischen dem Innengewindeabschnitt (14), der auf dem Lochabschnitt (11) der Überwurfmutter (2) und dem isodiametrischen Abschnitt (14) gebildet ist, und einer Innendurchmesserabmessung (D₄₆) der Dichtung (46) kleiner als eine Außendurchmesserabmessung (d) des Anschlagsrings (3) in einem angeordneten Zustand eingestellt ist, um zu verhindern, dass der Anschlagring (3) von der Überwurfmutter (2) in einem nicht benutzten Zustand abfällt.

## Revendications

1. Raccord de tuyau, comprenant :
un corps principal d'assemblage par évasement (1), ayant une partie de vis mâle (9) et une partie conique diminuant vers l'avant (5),
un écrou borgne (2), ayant une partie de vis femelle (12) vissée à la partie de vis mâle (9) sur une extrémité de base d'une partie de trou (11) de l'écrou borgne (2), et un espace de stockage (E) ayant une partie isodiamétrique (14) et une partie conique diminuant vers l'avant (17) est formée sur un milieu de la partie de trou (11),
une bague d'arrêt (3), placée dans l'espace de stockage (E), ayant une face inclinée d'emmanchement en force (32) pour être emmanchée en force vers la partie conique diminuant vers l'avant (5), ayant une partie cylindrique fine plastiquement déformable (35) sur un côté d'extrémité et une partie de griffe (36) pour mordre dans une face périphérique du tuyau, et ayant une rainure concave d'étanchéité (29) formée sur une partie moyenne sur la périphérie interne de la bague d'arrêt (3),
une fermeture (4), placée dans la rainure concave d'étanchéité (29) de la bague d'arrêt (3), dans laquelle
la partie de griffe (36) de la bague d'arrêt (3) mord dans une face périphérique (10A) de la partie d'extrémité droite (10) du tuyau connecté (P) ainsi que le vissage de l'écrou borgne (2) pour générer de la résistance de traction de tuyau (Z),
l'écrou borgne (2) a un anneau d'isolation circulaire (40) sur une partie d'extrémité d'écrou borgne (41) correspondant à la face périphérique du tuyau connecté (P), et
l'anneau d'isolation (40) couvre une partie de bord interne (20) et une face d'extrémité (23) de l'écrou borgne (2).

2. Raccord de tuyau selon la revendication 1, dans lequel l'anneau d'isolation (40) est fourni avec une arête d'étanchéité (45) qui entre fermement en contact avec la face périphérique du tuyau connecté (P).

3. Raccord de tuyau selon la revendication 1 ou la revendication 2, dans lequel une fermeture (46) est disposée entre la partie de vis femelle (14) formée sur la partie de trou (11) de l'écrou borgne (2) et la partie isodiamétrique (14), et une dimension de diamètre interne (D₄₆) de la fermeture (46) est réglée pour être inférieure à une dimension de diamètre externe (d) de la bague d'arrêt (3) dans l'état disposé de manière à empêcher la bague d'arrêt (3) de déposer l'écrou borgne (2) dans un état inutilisé.
